Europäisches Patentamt

European Patent Office

Office européen des brevets

(11) Numéro de publication: **0 175 627 B1**

## FASCICULE DE BREVET EUROPEEN

(45) Date de publication de fascicule du brevet:
13.03.91

(51) Int. Cl.⁵: **G03B 15/08**, G03C 11/02

(21) Numéro de dépôt: 85430022.5

(22) Date de dépôt: 29.07.85

(54) Procédé et dispositif pour le sous-titrage et/ou truquage de films cinématographiques utilisant notamment un copieur d'écran et un ordinateur.

(30) Priorité: 17.08.84 FR 8413003
17.05.85 FR 8507580

(43) Date de publication de la demande:
26.03.86 Bulletin 86/13

(45) Mention de la délivrance du brevet:
13.03.91 Bulletin 91/11

(84) Etats contractants désignés:
AT BE CH DE GB IT LI LU NL SE

(56) Documents cités:
FR-A- 2 533 328
GB-A- 2 036 369
US-A- 2 232 144

(73) Titulaire: **Gonsot, Christian**
**21 Bd Elémir Bourges**
**F-04100 Manosque(FR)**

(72) Inventeur: **Gonsot, Christian**
**21 Bd Elémir Bourges**
**F-04100 Manosque(FR)**

(74) Mandataire: **Hautier, Jean-Louis**
**Cabinet Hautier Office Méditerranéen de**
**Brevets d'Invention et de Marques 24 rue**
**Masséna**
**F-06000 Nice(FR)**

Rank Xerox (UK) Business Services

Description

L'invention a pour objet un procédé et son dispositif pour le soustitrage et/ou le truquage de films photographiques.

Actuellement, les sous-titrages présentent un inconvénient majeur, c'est d'être difficilement lisibles, car les lettres ne se détachent pas toujours bien du fond, généralement les sous-titres sont en blanc ou lorsqu'ils sont en couleurs, le sous-titre est d'une seule couleur. La couleur est donc choisie pour plusieurs images dont la couleur du fond n'est pas uniforme et peut varier d'une image à l'autre ; il s'ensuit qu'une partie du texte est lisible, l'autre partie est confondue avec le fond de l'image.

Un autre inconvénient dans le sous-titrage actuel de film réside dans la manipulation des films, qui est grande et qui augmente donc considérablement le coût.

Ainsi, actuellement on dispose une pellicule de cire sur le film, puis avec des bains acides, on grave dans la pellicule le texte. Autre inconvénient non négligeable, l'acide peut baver.

L'état de la technique peut être défini par les brevets suivants : FR-A-2.128.829,FR-A-2.239.708,FR-A-2.353.106,FR-A-2.533.328, en particulier le dernier divulgue un procédé tel que defini dans la préambulede la revendication 1.

A ces brevets, on peut ajouter le brevet suivant : US-A-2.232.144 : ce brevet ancien décrit un procédé connu sous le nom générique de "travelling mattes" qui consiste à superposer des films truqués.

Il ne compte pas les images, il ne compose pas les sous-titres par ordinateur, il n'exécute pas des copies avec des réserves pour les soutitres et il n'utilise pas de copieur d'image, ni de logiciel couleur pour nuancer la couleur du sous-titre en fonction du fond etc.

Le brevet FR-A-2.533.328 utilise un masque et un faisceau laser pour exécuter des inscriptions sur un film.

Le brevet GB-A-2.036.369 utilise également un faisceau laser.

L'invention évite tous ces inconvénients. Elle permet d'obtenir des sous-titres en couleurs dont la couleur peut varier dans le sous-titre en fonction du fond de chaque image. Ainsi, le début du sous-titre peut être en rouge, le milieu en noir, la fin en bleu avec tous les dégradés intermédiaires possibles. De plus, le sous-titrage se fait automatiquement, avec peu de manipulation de films, et pas de bain acide ni aucune surveillance lors des opérations commandées par l'ordinateur lors de la copie d'écran.

Le procédé pour le sous-titrage et/ou le truquage d'un film cinématographique couleur C1 utilisant un film supplémentaire noir et blanc NB ayant la même longueur que le film cinématographique C1, portant des sous-titres et/ou des truquages et étant superposé au film cinématographique C1 pour obtenir un film final sous-titré,est caractérisé par le fait que dans une première phase les n images du film cinématographique C1 à sous-titrer sont repérées, sélectionnées et comptées ; la composition desdits sous-titres et/ou truquages est composée par un ordinateur, puis copiée sur un film noir et blanc NB1 de n images au moyen d'un copieur d'écran ou "imageur" utilisé une première fois ; le film noir et blanc est développé, ladite composition apparaissant en noir sur fond transparent ; la composition de sous-titrage et/ou truquages est enregistrée en mémoire sur ordinateur ; le film cinématographique C1 et le film noir et blanc développé NB2 sont superposés pour obtenir une pellicule couleur C2 dont une partie représentant composition de sous-titrage et/ou truquage n'est pas encore exposée ; dans une deuxième phase la pellicule couleur encore sensible C2 est chargée dans une caméra du copieur d'écran, utilisé une seconde fois, tandis que les sous-titres et/ou truquages mémorisés puis colorés par l'ordinateur sont projetés à l'écran du copieur d'écran avec un calage parfait par rapport à la partie de la pellicule couleur C2 encore sensible ; les sous-titres colorés sont filmés pour obtenir ainsi une pellicule couleur C2 finale bonne à développer ; le film couleur ainsi obtenu comportant des sous-titres et/ou truquages colorés.

La coloration des sous-titres et/ou truquages par l'ordinateur s'effectue par un programme de sélection automatique ou par sélection manuelle et la sélection des couleurs se fait par l'intermédiaire de l'ordinateur, une deuxième caméra, branchée au niveau de l'ordinateur, laquelle digitalise l'image du film cinématographique C1 de manière à permettre son traitement informatique.

Un logiciel graphique est utilisé pour la coloration les sous-titres.

L'ordinateur est commandé manuellement, l'utilisateur choisit image par image la couleur du sous-titre ou de l'image réservée en utilisant le moniteur.

L'ordinateur, assisté par un logiciel de coloration, travaille automatiquement en analysant l'image de travail qui est saisie par la deuxième caméra qui digitalise une projection du film de base C1, cette projection étant parallèle à la deuxième phase de la copie d'écran.

La coloration des sous-titres s'effectue.par des filtres commandés par l'ordinateur, lesdits filtres étant disposés entre l'écran du copieur d'images et la caméra dudit copieur d'images.

On peut utiliser un contre-cache pour la seconde utilisation du copieur d'écran, au moment de la projection des sous-titres colorés à l'écran du copieur d'écran et du passage simultané au niveau de la caméra du copieur d'écran de la copie couleur C2.

Il consiste à projeter sur un miroir semi-réfléchissant disposé entre l'écran du copieur d'écran et la caméra du copieur d'écran un ou plusieurs films superposés NB + C1, un projecteur, mis en place au niveau du copieur d'écran, la caméra du copieur d'écran filme alors l'image I1 projetée sur ledit miroir semi-réfléchissant et l'image I2 de l'écran du copieur d'écran vue à travers ledit miroir semi-réfléchissant.

Le dispositif pour la mise en oeuvre du procédé comporte un ordinateur central avec une unité de mémoire, une unité de traitement vectoriel (processeur graphique), un copieur d'écran, un moniteur couleur, un logiciel de coloration. Il comporte un deuxième copieur d'écran. Il comporte un écran de table de montage. Il comporte une caméra supplémentaire qui digitalise l'image d'une projection du premier film C1. Ledit dispositif est caractérisé par le fait qu'il comporte au niveau du copieur d'écran, un moyen faisant office de miroir semi-réfléchissant ; ledit miroir semi-réfléchissant étant disposé entre l'écran du copieur d'écran et la caméra du copieur d'écran ; un projecteur, pouvant projeter au moins deux films superposés NB + C1, étant mis en place dans le copieur d'écran, de manière à projeter une image I1 sur ledit miroir semi-réfléchissant ; la caméra pouvant alors filmer cette image I1 qui se superpose avec l'image I2 de l'écran 18 qui se voit à travers ledit miroir semi-réfléchissant.

Les dessins ci-joints sont donnés à titre d'exemples indicatifs et non limitatifs. Ils représentent un mode de réalisation préféré selon l'invention. Ils permettront de comprendre aisément l'invention.

La figure 1 est une vue du dispositif mettant en évidence la configuration du matériel utilisé.

La figure 2 est un schéma mettant en évidence les différentes phases chronologiques du procédé.

La figure 3 est un schéma des images de la pellicule couleur C1.

La figure 4 est un schéma des images de la pellicule noir et blanc NB.

La figure 5 est un schéma de la pellicule couleur C2 non développée, obtenue à partir de la superposition des pellicules C1 (représenté à la figure 3) et NB (représenté à la figure 4), permettant d'obtenir une pellicule couleur C2 avec la réservation des sous-titrages.

La figure 6 est un schéma du dispositif mettant en évidence la configuration du matériel utilisé.

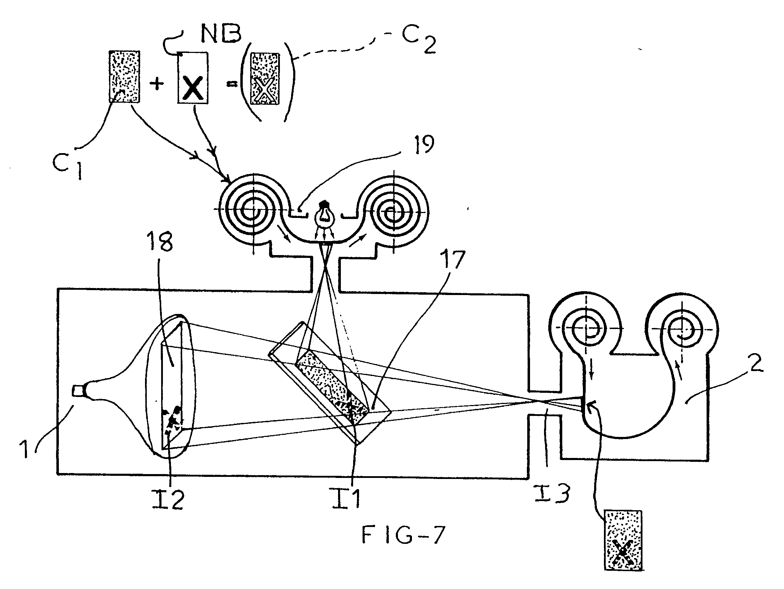

La figure 7 est une vue mettant en évidence l'action du miroir semi-réfléchissant dans le copieur d'écran.

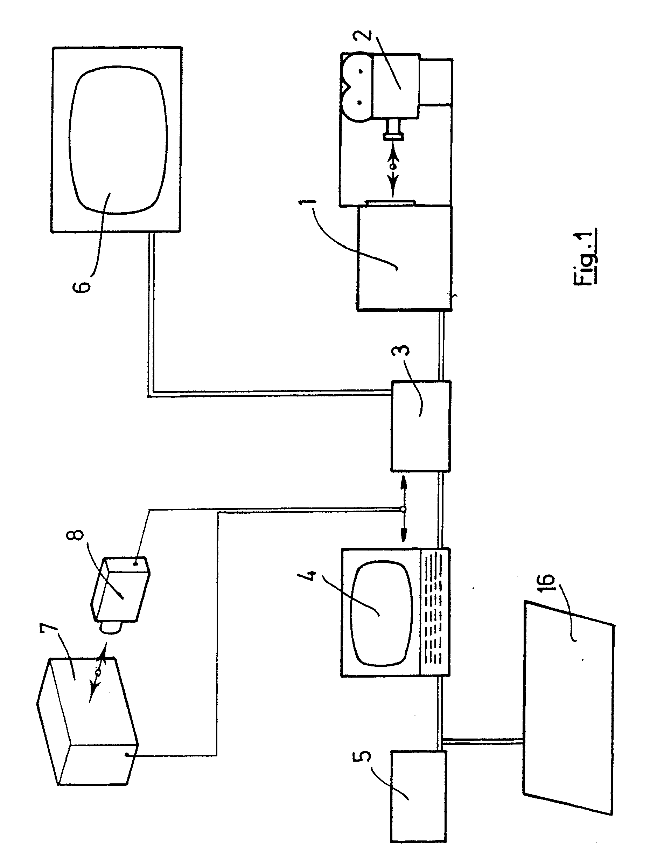

Dans la figure 1, sont représentés les éléments suivants.

Le copieur d'écran 1 avec sa caméra 2 (par exemple un copieur d'écran "imageur LOG.E.Dunn ou Matrix). Ce copieur est relié à l'unité de traitement vectoriel (processeur graphique) 3, (par exemple du type Jupiter ou Vextrix, marques déposées). Cette unité de traitement vectoriel 3 est commandée par l'ordinateur 4. L'ordinateur 4 dispose d'une unité de disquettes 5 pour la mise en mémoire des sous-titres et du logiciel de coloration. Un moniteur couleur 6 peut être mis en place au niveau de l'unité de traitement vectoriel 3. Enfin, un écran 7, pour une table de montage ou de vérification, peut être branché sur le dispositif, si nécessaire avec une caméra digitale 8.

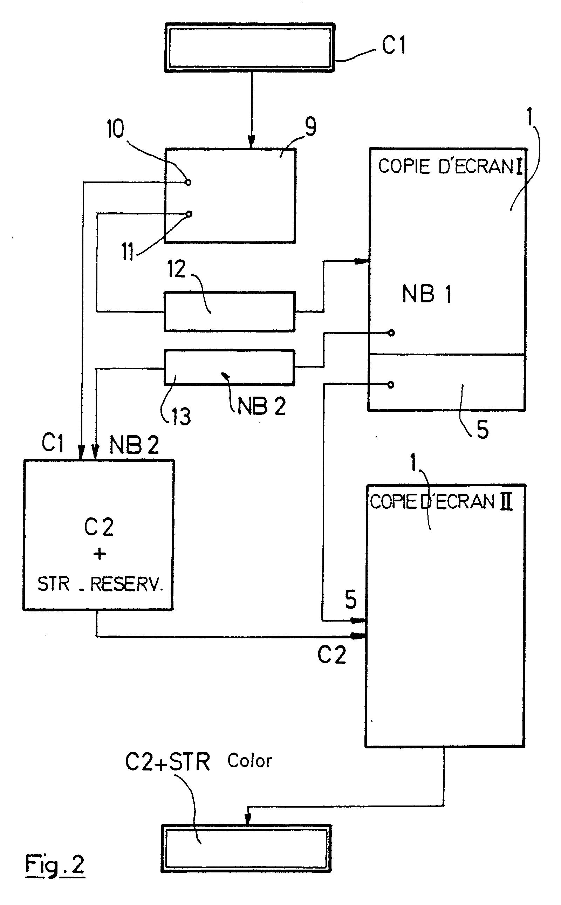

Le schéma représenté à la figure 2 permet de visualiser les différentes phases du procédé.

A partir du film couleur complet C1, on effectue une opération de repérage 9.

L'opération de repérage 9 consiste à sélectionner en 10, les images et à compter en 11, lesdites images $\overline{n}$ .

A partir du comptage du nombre d'images 11, on effectue la composition 12 des sous-titres sous forme digitale. A cet effet, on utilise l'ordinateur 4. Le sous-titrage se fait en utilisant une première fois le copieur d'écran 1. Les sous-titres sont obtenus en noir sur fond transparent avec le maximum de contraste. Les sous-titres 14 sont fixés sur une pellicule en noir et blanc NB. La pellicule NB1 est développée en 13, elle comporte les sous-titres 14. Les sous-titres 14 sont simultanément mémorisés sous forme digitale par l'ordinateur 4 sur une unité mémoire 5 par exemple des disquettes.

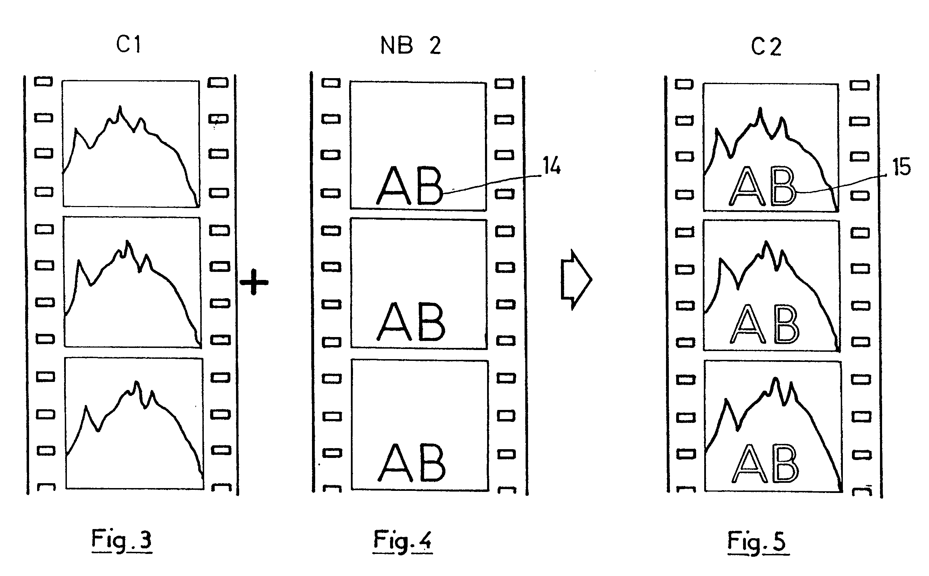

A partir de la copie couleur C1, on utilise la pellicule NB2 (qui est la pellicule NB1 développée), pour pratiquer la réservation du sous-titrage (voir les figures 3, 4, et 5). La superposition des pellicules C1 et NB2 permet d'obtenir une pellicule couleur C2 dont une partie 15 n'est pas exposée mais réservée par les sous-titres 14 (copie couleur C2 + RESERV). Cette pellicule C2 n'est pas développée mais réutilisée dans le copieur d'écran "imageur" 1.

On utilise une seconde fois le copieur d'écran 1, la copie C2 est chargée dans ledit copieur d'images, les sous-titres mémorisés sous forme digitale sur une unité mémoire 5 sont réutilisées après coloration par l'ordinateur 4. L'ensemble copieur, caméra est contrôlé par l'ordinateur 4. La coloration est obtenue au niveau de la copie C2 par des filtres du copieur d'écran 1 contrôlé par l'ordinateur 4.

Dans ce second passage des sous-titres 14 dans le copieur d'écran 1, lesdits sous-titres sont en couleurs. La couleur peut être choisie manuellement ou par l'intermédiaire de l'ordinateur (composition assistée par l'ordinateur à l'aide d'une tablette graphique 16). Celui-ci est assisté par un logiciel, commandant une coloration en couleurs complémentaires par rapport au fond. L'ordinateur peut également travailler automatiquement en analysant l'image de travail, qui peut être saisie et digitalisée par une caméra 8 retransmettant une projection du film de base C1. Cette projection est parallèle à la copie d'écran 1 (phase II).

Bien entendu, le procédé et le dispositif selon l'invention peuvent s'appliquer aux truquages de films. Ainsi, avec des dessins sur une console, ou une tablette graphique 16, on peut réserver des dessins qui apparaitront ensuite, après la phase II copie d'écran en couleurs, sur la copie couleur.

Le procédé de film-cache consiste à utiliser un diviseur optique (prisme) qui permet d'obtenir deux images de la scène, sur deux films différents. L'une d'elles, tirée très dense, sera chargée ensuite sur la caméra et permettra, en deux prises de vues, l'une du nouveau décor, l'autre de la scène primitive, de réaliser le truquage. La composition d'un fond, faisant office de décor, pouvant être composé par l'ordinateur.

En effet, comme pour un film-cache, on obtient un film nouveau décor, avec, en RESERVE, les déplacements des personnages préservés par le film cache. Une superposition avec la prise de vues initiale permettra de remettre, dans leur "emplacement" réservé, les personnages tels qu'on les a filmés.

C'est donc un procédé de cache et contre-cache où la pellicule joue le rôle de cache mobile. Ce procédé de truquage peut être utilisé par le procédé selon l'invention qui utilise le copieur d'écran.

Un autre procédé consiste à faire jouer la sélection chromatique et le système des filtres : le décor est filmé, comme pour une transparence, mais au lieu d'être projeté, il est tiré sur un positif VIRE EN ROUGE.

Ce positif sert ensuite de filtre : on le charge devant le négatif vierge, dans la caméra de prises de vues.

Les personnages évolueront alors, habillés et éclairés en rouge, tandis que les fonds de décor seront teintés en bleu violet. Le positif rouge absorbant les autres radiations, il ne restera, sur le négatif, que la reproduction du positif rouge et les personnages, rouges également, que l'on vient de filmer. Cet autre procédé de truquage peut également s'insérer dans le procédé selon l'invention. Le décor et/ou les personnages pouvant être composés par l'ordinateur.

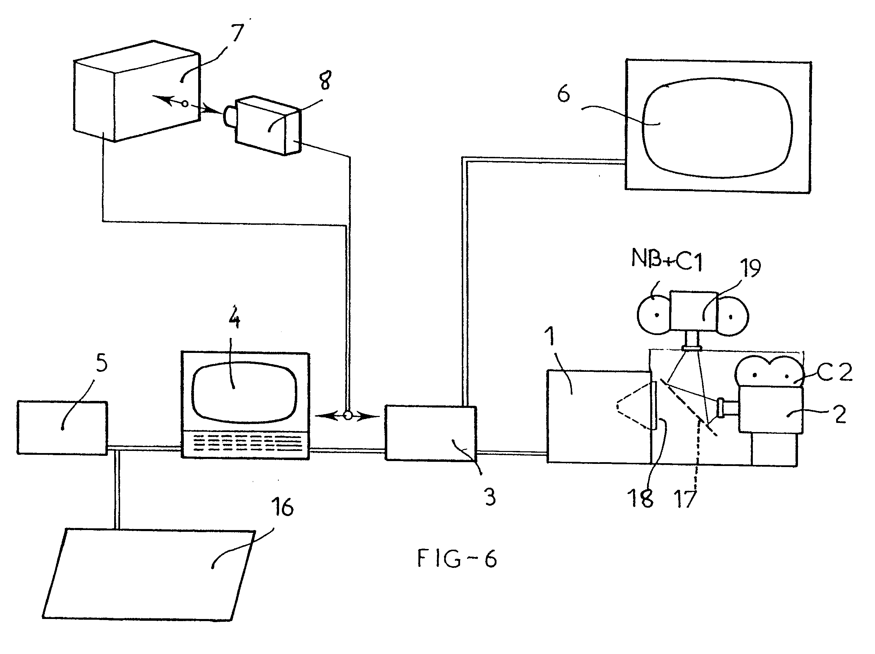

Le dispositif représenté dans la figure 6 est composé des éléments suivants :

- un ordinateur central 4 avec son unité mémoire 5 pour la mise en mémoire des sous-titres,

- une unité de traitement vectoriel (processeur graphique) 3,
- un copieur d'écran 1, avec sa caméra 2,
- un moniteur couleur 6,
- un logiciel de coloration, éventuellement,
- un écran de table de montage 7,
- une caméra supplémentaire digitale 8.

Au niveau du copieur d'écran 1, il est disposé un moyen faisant office de miroir semi-réfléchissant 17. Ledit miroir semi-réfléchissant est disposé entre l'écran 18 du copieur d'écran et la caméra 2. Un projecteur 19, pouvant projeter au moins deux films superposés NB + C1, est mis en place dans le copieur d'écran 1, de manière à projeter une image I1 sur ledit miroir semi-réfléchissant I7. La caméra 2 peut alors filmer cette image I1 qui se superpose avec l'image I2 de l'écran 18 qui se voit à travers ledit miroir semi-réfléchissant 17.

On peut ainsi directement obtenir un film original C2 ou une copie destinée à être recopiée.

L'image I3 filmée est la superposition des images I1 et I2. Le copieur d'écran 1 peut diffuser au niveau de son écran 18, bien entendu, des sous-titres colorés STR, mais également tout autre dessin tels que des dessins animés ou des plans pour dessins animés facilitant l'animation desdits dessins.

Le miroir réfléchissant 17 peut faire un angle d'environ 45° avec la verticale.

## Revendications

1. Procédé pour le sous-titrage et/ou le truquage d'un film cinématographique couleur(C1), utilisant un film supplémentaire noir et blanc (NB) ayant la même longueur que le film cinématographique (C1), portant des sous-titres et/ou des truquages et étant superposé au film cinématographique (C1) pour obtenir un film final sous-titré(C2), caractérisé par le fait

que dans une première phase les n images du film cinématographique (C1) à sous-titrer sont repérées, sélectionnées et comptées ; la composition desdits sous-titres et/ou truquages est composée par un ordinateur (4), puis copiée sur un film noir et blanc (NB1) de n images au moyen d'un copieur d'écran ou "imageur" (1) utilisé une première fois ; le film noir et blanc est développé, ladite composition aparaissanten noir sur fond transparent ; la composition de sous-titrage et/ou truquages est enregistrée en mémoire (5) sur ordinateur (4) ; le film cinématographique (C1) et le film noir et blanc développé (NB2) sont superposés pour obtenir une pellicule couleur (C2) dont une partie (15) représentant la composition de sous-titrage et/ou truquage n'est pas encore exposée ; dans une deuxième phase la pellicule couleur encore sensible (C2) est chargée dans une caméra (2) du copieur d'écran (1), utilisé une seconde fois, tandis que les sous-titres et/ou truquages mémorisés puis colorés par l'ordinateur (4) sont projetés à l'écran (18) du copieur d'écran (1) avec un calage parfait par rapport à la partie (15) de la pellicule couleur (C2) encore sensible ; les sous-titres colorés sont filmés pour obtenir ainsi une pellicule couleur (C2) finale bonne à développer ; le film couleur ainsi obtenu comportant des sous-titres et/ou truquages colorés.

2. Procédé selon la revendication 1 caractérisé par le fait

que la coloration des sous-titres (14) et/ou truquages par l'ordinateur s'effectue par un programme de sélection automatique ou par sélection manuelle et la sélection des couleurs se fait par l'intermédiaire de l'ordinateur (4), une deuxième caméra (8), branchée au niveau de l'ordinateur (4), laquelle digitalise l'image du film cinématographique (C1) de manière à permettre son traitement informatique.

3. Procédé selon l'une quelconque des revendications 1 ou 2 caractérisé par le fait

qu'un logiciel graphique (3) est utilisé pour la coloration les sous-titres.

4. Procédé selon l'une quelconque des revendications 1, 2 ou 3 caractérisé par le fait

que l'ordinateur (4) est commandé manuellement, l'utilisateur choisit image par image la couleur du sous-titre (14) ou de l'image réservée en utilisant le moniteur (6).

5. Procédé selon l'une quelconque des revendications 1, 2, 3 ou 4 caractérisé par le fait

que l'ordinateur (4), assisté par un logiciel de coloration, travaille automatiquement en analysant l'image de travail qui est saisie par la deuxième caméra (8) qui digitalise une projection du film de base (C1), cette projection étant parallèle à la deuxième phase de la copie d'écran.

6. Procédé selon l'une quelconque des revendications précédentes caractérisé par le fait

que la coloration des sous-titres s'effectue par des filtres commandés par l'ordinateur (4), lesdits filtres étant disposés entre l'écran du copieur d'images (1) et la caméra (2) dudit copieur d'images.

7. Procédé selon l'une quelconque des revendications 1, 2, 3, 4, 5 ou 6 caractérisé par le fait

qu'on peut utiliser un contre-cache pour la seconde utilisation du copieur d'écran (1), au moment de la projection des sous-titres colorés à l'écran (18) du copieur d'écran (1) et du passage simultané au niveau de la caméra (2) du copieur d'écran (1) de la copie couleur (C2).

8. Procédé selon la revendication 1 caractérisé par le fait

qu'il consiste à projeter sur un miroir semi-réfléchissant (17) disposé entre l'écran (18) du copieur d'écran et la caméra (2) du copieur d'écran (1) un ou plusieurs films superposés (NB + C1), un projecteur (19), mis en place au niveau du copieur d'écran, la caméra (2) du copieur d'écran (1) filme alors l'image (I1) projetée sur ledit miroir semi-réfléchissant (17) et l'image (I2) de l'écran (18) du copieur d'écran (1) vue à travers ledit miroir semi-réfléchissant (17).

9. Dispositif pour la mise en oeuvre du procédé selon l'une quelconque des revendications 1 à 8 , ledit dispositif comporte un ordinateur central (4) avec une unité de mémoire (4, 5), une unité de traitement vectoriel (processeur graphique (3)), un copieur d'écran (1), un moniteur couleur (6), un logiciel de coloration caractérisé par le fait

qu'il comporte au niveau du copieur d'écran (1), un moyen faisant office de miroir semi-réfléchissant (17) ; ledit miroir semi-réfléchissant étant disposé entre l'écran (18) du copieur d'écran et la caméra (2) du copieur d'écran (1) ; un projecteur (19), pouvant projeter au moins deux films superposés (NB + C1), étant mis en place dans le copieur d'écran (1), de manière à projeter une image (I1) sur ledit miroir semi-réfléchissant (17) ; la caméra (2) pouvant alors filmer cette image (I1) qui se superpose avec l'image (I2) de l'écran (18) qui se voit à travers ledit miroir semi-réfléchissant (17).

## Claims

1. A method of providing a coloured cine-film (C1) with subtitles and/or of trick-filming with a coloured cine-film, wherein an auxiliary black-and-white film (NB) of the same length as the cine-film (C1) is used, which carries the subtitles and/or the film tricks and which is superposed on the cine-film (C1) so that a final, subtitled film (c2) can be obtained, **characterized** in that

the $n$ images of the cine-film ($c_1$) to be subtitled are marked, selected and counted in a first phase, the setup of the subtitles and/or film tricks being produced by a computer (4), and are then copied onto a black-and-white film (NB1) of $n$ images by means of a screen copier or an "image device" (1) used for a first time; the black-and white film is developed, with said setups appearing in black on the transparent reverse side, the setup of the subtitles and/or the film tricks is stored in a memory (5) of the computer (4), the cine-film ($C_1$) and the developed black-and-white film (NB2) are superposed in order to obtain a coloured film ($C_2$) whose region (15) representing the setup of the subtitles and/or the film tricks is not as yet exposed; in a second phase the still sensitive colour film ($C_2$) is loaded into a camera (2) of the screen copier (1) used for a second time, whilst the subtitles and/or film tricks which are stored and then coloured by the computer (4) are projected onto the screen (18) of the screen copier (1) in perfect orientation relative to the still sensitive area (15) of the colour film ($C_2$); the coloured subtitles are filmed so as to obtain a final colour film ($C_2$) which is ready for developing, with the colour film obtained in this way carrying the coloured subtitles and/or film tricks.

2. The method according to claim 1,
characterized in that
colouring of the subtitles (14) and/or the film tricks through the computer is effected by means of an automatic selection program or by manual selection, selection of the colours ensuing with the aid of the computer (4) and a second camera (8) connected to the computer (4), which camera digitizes the image of the cine-film ($C_1$) so as to permit data processing.

3. The method according to claim 1 or claim 2,
characterized in that
a graphic program (3) is used for colouring the subtitles.

4. The method according to one of claims 1, 2 or 3,
characterized in that
the computer (4) is operated manually, with the user selecting, image by image, the colour of the subtitle (14) or of the reserved image, using a monitor (6).

5. The method according to one of claims 1, 2, 3 or 4,
characterized in that,
assisted by a colouring program, the computer (4) works in a automated fashion in that it analyzes the processing image detected by the second camera (8) which digitizes a projection of the base film ($C_1$), this projection running parallel with the second phase of the screen copy.

6. The method according to one of the preceding claims,
characterized in that
colouring of the subtitles is effected by means of filters operated by the computer (4), with the filters being arranged between the screen of the image copier (1) and the camera (2) of said image copier.

7. The method according to one of claims 1, 2, 3, 4, 5 or 6,
characterized in that
for the second use of the screen copier (1) a counter-mask may be employed at the instant of projection of the coloured subtitles onto the screen (18) of the screen copier (1) and of the simultaneous passage of the coloured copy ($C_2$) at the level of the camera (2) of the screen copier (1).

8. The method according to claim 1,
characterized in that
it consists in projecting one or several superposed films (NB + $C_1$) onto a semiflecting mirror (17) which is mounted between the screen (18) of the screen copier and the camera (2) of the screen copier (1), a projector (19) mounted at the level of the screen copier, the camera (2) of the sceen copier (1) now filming the image (II) projected onto the semireflecting mirror (17) and the image (12) of the screen (18) of the screen copier (1) seen through the semi-reflecting mirror (17).

9. Apparatus for carrying out the method according to one of claims 1 to 8, comprising a central computer (4) with a memory unit (4, 5), a vector processing unit (graphic processor (3)), a screen copier (1), a colour monitor (6), a colouring program,
characterized in that
at the level of the screen copier (1) it comprises a means serving as a semireflecting mirror (17), said semireflecting mirror being disposed between the screen (18) of the screen copier and the camera (2) of the screen copier (1); a projector (19) capable of projecting at least two superposed films (NB + C1), provided in the image copier (1) so as to project an image (II) onto the semireflecting mirror (17), the camera (2) now being in a position to film said image (II) which is superposed with the image (12) of the screen (18) which may be seen through said semireflecting mirror (17).

**Ansprüche**

1. Verfahren zur Untertitelung eines Farbkinofilmes $(C_1)$ und/oder zum Trickfilmen mit einem Farbkinofilm, bei dem ein Hilfs-Schwarz-Weiß-Film (NB) derselben Länge wie der Kinofilm $(C_1)$ benützt wird, der die Untertitel und/oder die Filmtricks trägt und der dem Kinofilm $(C_1)$ überlagert ist, um einen endgültigen, untertitelten Film $(C_2)$ zu erhalten, dadurch **gekennzeichnet, daß** die n Bilder des zu untertitelnden Kinofilmes $(C_1)$ in einer ersten Phase markiert, ausgewählt und gezählt werden - wobei der Aufbau der Untertitel und/oder Filmtricks durch einen Computer (4) erzeugt wird - und dann mittels eines erstmalig benutzten Schirmkopierers oder "Bildgerätes" (1) auf einen Schwarz-Weiß-Film (NB1) von n Bildern kopiert werden, der Schwarz-Weiß-Film entwickelt wird, wobei die Aufbauten als Schwärzung auf der transparenten Rückseite erscheinen und der Aufbau der Untertitel und/oder der Filmtricks in einen Speicher (5) des Computers (4) eingespeichert ist, der Kinofilm $(C_1)$ und der entwickelte Schwarz-Weiß-Film (NB2) überlagert werden, um einen Farbfilm $(C_2)$ zu erhalten, dessen den Aufbau der Untertitel und/oder der Filmtricks darstellender Bereich (15) noch nicht belichtet wird; in einer zweiten Phase wird der immer noch empfindliche Farbfilm $(C_2)$ in eine Kamera (2) des zum zweitenmal benutzten Schirmkopierers (1) geladen, wohingegen die Untertitel und/oder Filmtricks, die durch den Computer (4) gespeichert und dann koloriert werden, auf den Schirm (18) des Schirmkopierers (1) in bezug auf den immer noch empfindlichen Bereich (15) des Farbfilmes $(C_2)$ in optimaler Ausrichtung projiziert werden; die kolorierten Untertitel werden gefilmt, um somit einen zur Entwicklung geeigneten endgültigen Farbfilm $(C_2)$ zu erhalten, wobei der so erhaltene Farbfilm die kolorierten Untertitel und/oder Filmtricks trägt.

2. Verfahren nach Anspruch 1, dadurch gekennzeichnet, daß die Kolorierung der Untertitel (14) und/oder der Filmtricks mittels des Computers mit einem automatisch auswählenden Programm oder durch manuelle Auswahl vollzogen wird, wobei die Auswahl der Farben mittels des Computers (4) und einer zweiten, mit dem Computer (4) verschalteten Kamera (8) gemacht wird, die das Bild des Kinofilms $(C_1)$ so digitalisiert, daß Datenverarbeitung ermöglicht wird.

3. Verfahren nach Anspruch 1 oder 2, dadurch gekennzeichnet, daß ein Graphikprogramm (3) zur Kolorierung der Untertitel verwendet wird.

4. Verfahren nach einem der Ansprüche 1, 2 oder 3, dadurch gekennzeichnet, daß der Computer (4) manuell bedient wird, wobei der Anwender Bild für Bild die Farbe der Untertitel (14) oder des freigehaltenen Bildes unter Verwendung eines Bildschirmes (6) wählt.

5. Verfahren nach einem der Ansprüche 1, 2, 3 oder 4, dadurch gekennzeichnet, daß der Computer (4), unterstützt von einem Kolorierungsprogramm, automatisiert arbeitet, indem er das von der zweiten Kamera (8) erfaßte, zu bearbeitende Bild analysiert, wobei die Kamera (8) eine Projektion des Grundfilmes $(C_1)$, die parallel zur zweiten Phase der Schirmkopie erfolgt, digitalisiert.

6. Verfahren nach einem der vorhergehenden Ansprüche, dadurch gekennzeichnet, daß die Kolorierung der Untertitel mittels vom Computer (4) bedienter Filter durchgeführt wird, wobei die Filter zwischen dem Schirm des Bildkopierers (1) und der Kamera (2) des Bildkopierers angeordnet sind.

7. Verfahren nach einem der Ansprüche 1, 2, 3, 4, 5 oder 6, dadurch gekennzeichnet, daß man für die zweite Anwendung des Schirmkopierers (1) im Moment der Projektion der kolorierten Untertitel auf den Schirm (18) des Schirmkopierers (1) und des gleichzeitigen Durchlaufs der kolorierten Kopie $(C_2)$ auf dem Niveau der Kamera (2) des Schirmkopierers (1) eine Gegencachierung verwenden kann.

8. Verfahren nach Anspruch 1, dadurch gekennzeichnet, daß dieses daraus besteht, einen oder mehrere überlagerte Filme (NB + $C_1$) auf einen halbreflektierenden Spiegel (17), der zwischen dem Schirm (18) des Schirmkopierers und der Kamera (2) des Schirmkopierers (1) angebracht ist, zu projizieren, einem auf dem Niveau des Schirmkopierers angebrachten Projektor (19), so daß die Kamera (2) des Schirmkopierers (1) das auf den halbreflektierenden Spiegel (17) projizierte Bild (l1) und das Bild (l2) des Schirmes (18) des Schirmkopierers (1), das sie durch den halbreflektierenden Spiegel (17) hindurch sieht, filmt.

9. Vorrichtung zur Durchführung des Verfahrens nach einem der Ansprüche 1 bis 8, wobei die Vorrichtung einen Zentralcomputer (4) mit einer Speichereinheit (4, 5) aufweist, eine vektoriell arbeitende Einheit (Graphikprozessor (3)), einen Schirmkopierer (1), einen Farbbildschirm (6), ein Kolorierungsprogramm,
dadurch **gekennzeichnet,** daß
sie auf der Höhe des Schirmkopierers (1) eine als halbreflektierender Spiegel (17) dienende Einrichtung aufweist; wobei der halbreflektierende Spiegel zwischen dem Schirm (18) des Schirmkopierers und der Kamera (2) des Schirmkopierers (1) angebracht ist; einen Projektor (19), der zumindest zwei überlagerte Filme (NB + $C_1$) projizieren kann und der im Schirmkopierer (1) so vorgesehen ist, daß er ein Bild (l1) auf den halbreflektierenden Spiegel (17) projiziert, so daß die Kamera (2) dieses Bild (l1) filmen kann, das sich mit dem Bild (l2) des Schirmes (18), das durch den halbreflektierenden Spiegel (17) hindurch gesehen werden kann, überlagert.

EP 0 175 627 B1

Fig.1

Fig.2

Fig. 5

Fig. 4

Fig. 3

FIG-6

FIG-7

EP 0 175 627 B1